Europäisches Patentamt

(19) European Patent Office

Office européen des brevets

(11) Publication number: **0 098 703**
A2

(12) **EUROPEAN PATENT APPLICATION**

(21) Application number: **83303466.3**

(22) Date of filing: **15.06.83**

(51) Int. Cl.³: **B 60 N 1/06**

(30) Priority: **02.07.82 GB 8219250**

(43) Date of publication of application: **18.01.84**
Bulletin 84/3

(84) Designated Contracting States: **DE FR GB IT SE**

(71) Applicant: **TI COX LIMITED, 177 Lenton Boulevard, Nottingham NG7 2DD (GB)**

(72) Inventor: **Babbs, Frederick William, Mountfield 102A, Cropwell Road, Radcliffe on Trent Nottingham (GB)**

(74) Representative: **Arthur, George Fitzgerald et al, KILBURN & STRODE 30, John Street, London WC1N 2DD (GB)**

(54) **Lifting and lowering mechanism.**

㊙ A lifting and lowering mechanism for a car seat includes a pair of fore-and-aft position adjusting sliders (12, 13) on the upper one of which a seat (11) is supported on legs (15, 16) pivoted at the ends of front and rear bell cranks (17) pivoted at (21) to the upper slide (12). The other arm of the bell cranks is connected at (23) to opposite ends of a strut (24) which can be clamped in any longitudinal position by a clamping mechanism (31, 32). A height adjusting handle (46) when moved in either sense, first releases the clamp and then lifts or lowers the seat by moving the strut (24) forwardly or rearwardly to rotate the bell cranks. After release of the handle the lock re-engages in the new position of the strut and the new height of the seat.

:1.

# LIFTING AND LOWERING
## MECHANISM

This invention relates to a lifting and lowering mechanism, and one object is to provide such a mechanism which is suitable for adjusting the height of a seat in a vehicle without requiring a great deal of space at the side of the seat. Although the invention was developed particularly for lifting and lowering a car seat, the principle can be applied just as easily to lifting and lowering any other equipment.

According to the invention, a lifting and lowering mechanism includes a pivotally mounted crank for lifting and lowering, a lock for the crank in any position, and a lever arranged when moved in either sense, first to release the lock and then to move the crank, and when released to re-engage the lock.

The crank can be a bell crank having one pivotal connection with the seat or other equipment to be raised and lowered, another connection to a base and a third connection to the lever. The connection to the lever is conveniently by way of an elongate strut which moves longitudinally in a lock member and can be clamped in any longitudinal position. That arrangement is particularly convenient where both the front and the rear of the equipment have to be raised or lowered together because there can be two cranks one at the front and one at the rear, and the strut which can be clamped in the lock can be pivotally connected at its respective ends to the two cranks to cause them to move together and be locked together

In a preferred arrangement, the lever has a handle at one end and is pivoted at the other end
to the crank directly or indirectly, and is pivoted
at an intermediate point to a lock release link.
That arrangement enables initial movement of the lever
in either sense to cause pivoting about the.said other
end until the link releases the lock, after which the
link is held and acts as a fulcrum so that further
movement of the lever causes the other end of the lever
to drive the crank in a lifting or lowering operation.
There may be spring means biasing the crank in the
lifting direction, so that once the lock has been
released the lifting force can be supplied partly
by the spring and does not have to be supplied entirely
by manual movement of the lever. Lowering can of course
be assisted by gravity to  return energy to the spring.

One convenient form of lock comprises a pair of
angled plates, each with a hole for the strut and each
spring biased to turn to clamp the strut at opposite
edges of the holes, but capable of being moved against
the springs during first movement of the lever after
which the lock provides a fulcrum for further movement
of the lever.

Where there are two cranks, one at each end of
a piece of equipment they may have lifting arms of
different length so that the front and back of the
equipment are lifted and lowered by different amounts.

A piece of equipment can be lifted by two similar
lifting and lowering mechanisms, one at each side of
the equipment, and controlled from a single lever
by means of an appropriate transverse connecting device.

That arrangement is particularly suitable for controlling the height of a car seat, where there is one device at each side of the seat.

Frequently a seat mounting device is in the form of a pair of relatively slidable elongate members enabling the fore-and-aft position of the seat to be adjusted, and the invention is particularly suitable with that kind of device because most of the components of the lifting and lowering mechanism can be contained within the width of the slide device leaving only an external connection for the lever at one side. The lever can be quite thin and by appropriate choice of the pivotal points on the lever a full range of height adjustment can be achieved by pivoting the lever through an arc of perhaps 60° centered about a vertical axis, so that the lever does not interfere with the side of the car or a central console.

The invention may be carried into practice in various ways, and one embodiment will now be described by way of example, with reference to the accompanying drawings in which:

FIGURE 1 is a side elevation of a stepless height adjuster for one side of a motor car sear;

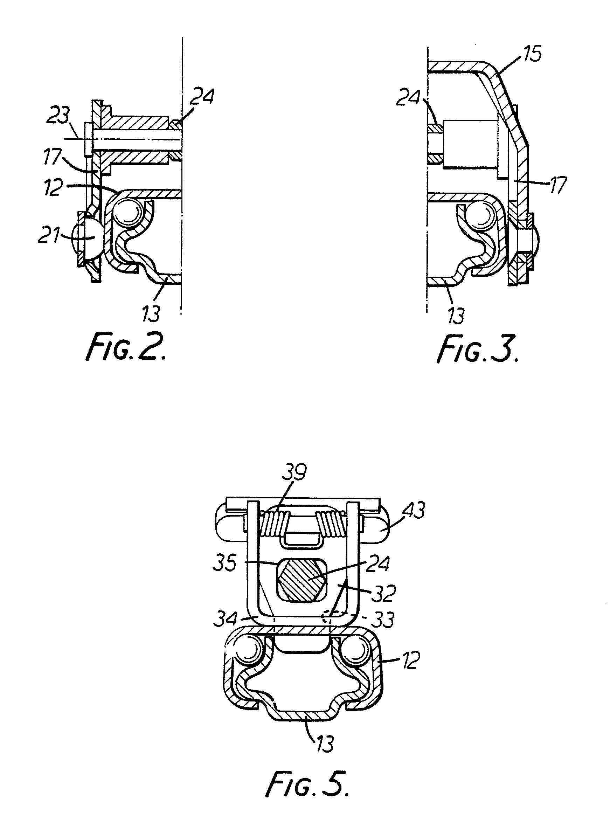

FIGURES 2,3,4, and 5 are sections/or half-sections, on the lines II, III, IV and V in FIGURE 1.

The seat 11 is supported on two adjusters, each as shown in the Figures, and at each side of the seat. Each comprises a fore-and-aft slider 12 ( which can slide on a fixed inner slider 13 as controlled by a handle in a conventional manner) carrying a pair of generally-vertical struts 15 and 165 for supporting the side of the seat at front and rear respectively. Each strut is pivoted at its lower end 22 to the rearwardly extending arm of a double bell crank 17 which is pivotally mounted about a transverse horizontal axis 21 from he slider 12. The upper ends of the vertical arms of each double bell crank 17 are joined by a transverse horizontal pivot pin 23 passing through a bore in the forward end of a connecting strut 24. The arrangement of the rear bell crank 17 is similar but the pin 23 is pivoted to the rear end of the strut 24.

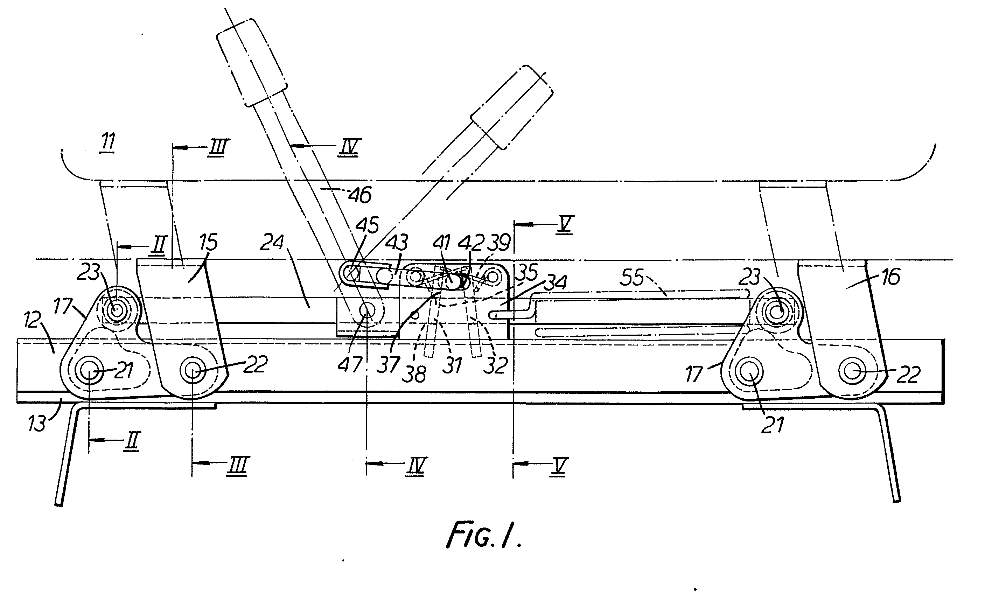

It will be appreciated that by turning the bell cranks 17 coupled together by the strut 24 in an anti-clockwise direction, the seat 11 can be raised at front and rear from the solid line osition to the chanin line position. If as shown in FIGURE 1, the distance between the axes 21 and 2 on the front bell crank 17 is less than that between axes 21 and 22 on the rear bell crank 17, ten for any given angular movement of the bell cranks, the rear of the seat will be raised a little more than the front of the seat. Any other proportional lifting arrangement is possible by appropriate choice of the distances between the bell crank axes 21 and 22 on the two bell cranks.

The seat is retained at a selected height by clamping the strut 24 in the corresponding fore-and-aft position, and that is achieved by passing the strut through a pair of wedge plates 31 and 32. They are pivotally mounted in slots 33 in the base of bracket 34, and in the top of the slider 12 to which the bracket is welded. Each wedge plate has a hole 35 through which the strut 24 can pass with slight clearance so that when the wedge plates are inclined, as shown in FIGURE 1, opposite edges 37 and 38 of each hole grip the strut 24. The wedge plates 31 and 32 are normally retained in that gripping position by means of a pair of springs 39 urging the plates towards each other at the top.

The strut 24 has a hexagonal cross-section at the centre portion of its length to enable a good grip to be achieved.

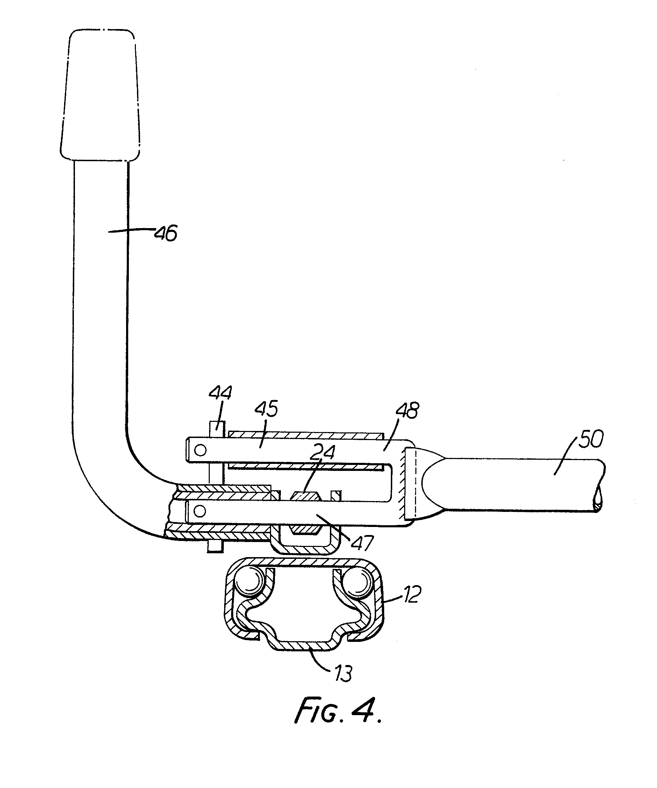

The wedge can be released by a transverse pin 41 extending between two horizontal slots 42 one in each arm of the bracket 34. The pin 41 is part of a link 43 pivotally connected at 45 to a point near the lower end of a height adjustment lever 46. The lower end of the lever 46 is pivoted at 47 to the strut 24. The pivots 45 and 47 are defined by two pins constituting the arms of a bracket 48 (FIGURE 4) which at their free ends pass through holes in a spacer plate 44. The lower pin 47 which extends through a bore in the strut 24, is in fact in the end of the lever 46 which is itself in the spacer plate.

The pin 45 fits in the link 43.

Movement of the lever 46 forwardly or rearwardly from an intermediate position first is about the axis 47, so that the connecting link 43 moves forwardly or rearwardly and the pin 41 pushes one of the plates 31 and 32 about the first slot 33 in a direction to release the wedge clamp action of the plates. The pin 41 is stopped in the release position when it strikes and further movement of the lever 46 is about the axis 45 so that the strut 24 moves forwardly or rearwardly depending on whether the lever 46 was moved rearwardly or forwardly. There is corresponding rotation of the bell cranks 17 and 18 to raise or lower the seat.

Once the lever 46 is released, the action of the springs 39 on the wedge plates returns the pin 41 and returns the plates to the wedge release position so that the clamp is re-engaged and the seat remains at the new height.

The brackets 48, one on each slider mechanism at the two sides of the seat are joined by a transverse bar 50 (Figure 4) welded to them, so that movement of a single handle 46 causes wedge-release action and seat-lifting and lowering on both slider mechanisms simultaneously.

The design has the advantage that height adjustment throughout the complete range allowed by the bell cranks is achieved merely by moving the lever 46 in a total arc of about $60^{\circ}$. Figure 4 shows how the lever 46 occupies a narrow space at the outside of the runner or slide 12, and that can be easily accommodated between the side of the seat and the centre console of a motor vehicle. The extreme positions of the lever 46 are arranged to be about $30^{\circ}$ on either side of the vertical, as shown in Figure 1, so as not to be obstructed by the console. It is not necessary to provide room for the height adjusting mechanism at the outside of the seat where it would obstruct arm rests and glove pockets built into the door.

A pair of tension springs 55 are connected between the bracket 34 and the forward ends of the rear bell cranks 17 to provide a 70 Kg upward thrust which balances a typical occupant's weight. Thus, the lever 46 does not have to be used to apply very much upward thrust.

CLAIMS

1.     A lifting and lowering mechanism including a pivotally mounted crank (17) for lifting and lowering, a lock (31,32) for the crank in any position and a lever (46) arranged when moved in either sense first to release the lock, and then to move the crank, and when released to re-engage the lock or permit it to be re-engaged.

2.     A mechanism as claimed in Claim 1 in which the crank is a bell crank pivoted to one of two members the spacing between which is to be varied, and being pivotally connected at its two arms respectively to the other member, and to the lever.

3.     A mechanism as claimed in Claim 2 in which the connection between the bell crank and the lever is by way of an elongate strut (24) which can be clamped by the lock in any longitudinal position.

4.     A mechanism as claimed in Claim 3 in which there are a pair of bell cranks for acting together for lifting or lowering, the two bell cranks being interconnected by the strut.

5.     A mechanism as claimed in any of the preceding claims in which the lever has a handle at one end and is pivoted at the other end (47) directly or indirectly to the crank and is pivoted at an intermediate point (45) to a lock release link (43).

6.      A mechanism as claimed in any of the preceding claims including spring means (55) biasing the crank in the lifting direction.

7.      A mechanism as claimed in any of the preceding claims in which the lock comprises a pair of angled plates (31,32) each with a hole for the strut and each spring biased to turn to clamp the strut at opposite edges of the holes, but capable of being moved against the springs (39) during first movement of the lever after which the lock provides a fulcrum for further movement of the lever.

8.      A mechanism as claimed in any of the preceding claims including two cranks (17) one at each end of a piece of equipment, and interconnected by a strut, the two cranks having lifting arms of different lengths.

9.      A seat or other piece of equipment arranged to be lifted by two similar mechanisms each as claimed in any of the preceding claims, one at each side of the equipment, and controlled from a single lever (46) by means of a transverse connection (50).

10.     A seat as claimed in Claim 9 in which each of the lifting and lowering mechanisms includes a pair of relatively slideable elongate members (12,13) enabling the fore-and-aft position of the
seat to be adjusted, the components of the lifting
and lowering mechanism except for the lever being
positioned substantially between two vertical surfaces
in line with the outer surfaces of the slide members.

FIG. I.

0098703

2/3

FIG. 2.

FIG. 3.

FIG. 5.

FIG. 4.